# EUROPÄISCHE PATENTSCHRIFT

(11) **EP 3 705 334 B1**
(45) Veröffentlichungstag und Bekanntmachung des Hinweises auf die Patenterteilung: **01.12.2021**
(21) Anmeldenummer: 20161639.8
(22) Anmeldetag: 06.03.2020
(51) Int. Cl.: B60K 35/00, B60K 37/04, G02B 27/01

(54) **FAHRZEUG MIT ANZEIGEEINRICHTUNG**
VEHICLE WITH DISPLAY DEVICE
VÉHICULE POURVU DE DISPOSITIF D'AFFICHAGE

(30) Priorität: 07.03.2019 DE 102019105855
(43) Veröffentlichungstag der Anmeldung: 09.09.2020
(73) Patentinhaber: Deutsche Post AG, 53113 Bonn (DE)
(72) Erfinder: Schneebeck, Holger, 50968 Köln (DE)
(74) Vertreter: Michalski Hüttermann & Partner Patentanwälte mbB

(56) Entgegenhaltungen:
- DE-A1-102017 207 788
- KR-A- 20140 084 409
- US-A1- 2017 052 438
- US-A1- 2018 239 141
- US-B2- 8 947 219

## Beschreibung

### Technisches Gebiet

Gegenstand ist ein Fahrzeug für einen Fahrer des Fahrzeugs und einer Anzeigeeinrichtung. Weiterhin wird ein Verfahren zum Darstellen einer Projektion auf einer Projektionsfläche für einen Fahrer eines Fahrzeugs vorgeschlagen.

### Hintergrund

Aktuell geschieht die Informationsübermittlung an Fahrer von Fahrzeugen im gewerblichen Bereich, wie Logistik oder Baugewerbe, zumeist über Funk oder fest montierte Displays. Dies hat den Nachteil, dass sich die Informationen nicht immer im Blickfeld des Fahrers des Fahrzeugs befinden. Weiterhin sind über fest montierte Displays oder Funk die Informationen auch nicht in einen räumlichen Kontext einbettbar.

Eine Möglichkeit diese Situation zu verbessern, besteht darin, Head-Up-Displays (HUDs) zu verwenden, auf denen dem Fahrer Informationen angezeigt werden können. Herkömmliche HUDs sind im Bereich der Windschutzscheibe platziert, was der primären Blickrichtung des Fahrers entspricht. Allerdings müssen Gabelstapelfahrer und andere Fahrer von Fahrzeugen im gewerblichen Bereich aufgrund der besonderen Anforderungen ihrer Tätigkeit oft Richtungswechsel durchführen oder größere Distanzen rückwärtsfahren. Dies erfordert ein häufiges Drehen des Kopfes, um die für die korrekte Durchführung des Fahrmanövers und einer damit verbundenen Aufgabe notwendigen Umgebungsinformationen aufnehmen zu können. Dementsprechend befinden sich während der Rückwärtsfahrt Informationen auf einem herkömmlichen HUD nicht mehr im Blickfeld des Fahrers.

Die US 8 947 219 B2 beschreibt ein Warnsystem für ein Kraftfahrzeug umfassend eine Head-Up-Anzeige. Das Warnsystem erkennt ein entferntes Fahrzeug, das eine potenzielle Gefahr für ein Gast-Fahrzeug darstellt, bestimmt, ob das entfernte Fahrzeug für den Fahrer des Gast-Fahrzeug sichtbar ist, und zeigt ein Bild auf einem Kombinierer der Head-Up-Anzeige an. In einigen Fällen ist der Kombinierer eine Windschutzscheibe oder ein Fenster des Kraftfahrzeugs.

Die DE 10 2017 207788 A1 beschreibt ein Kraftfahrzeug mit einem Fahrdynamikerkennungsmodul zur Bestimmung des Nickwinkels, des Rollwinkels und/oder der Vertikalauslenkung des Kraftfahrzeuges, wobei das Kraftfahrzeug eine Projektionseinrichtung zur Projektion einer Linie als künstlichen Horizont auf eine Innenfläche des Kraftfahrzeuges aufweist.

Die KR 2014 0084409 A beschreibt eine Anzeigevorrichtung und ein Verfahren zum Führen des Betriebs eines Fahrzeugs oder einer Baumaschine unter Verwendung einer Head-Up-Anzeige (HUD).

Die US 2018/239141 A1 beschreibt eine optische Vorrichtung für eine Nahaugenanzeige umfassend eine Mikroanzeige zum Aussenden von Bildlicht und eine oder mehrere Feldlinsen, die positioniert sind, um das Bildlicht von der Mikroanzeige zu empfangen.

Die US 2017/052438 A1 beschreibt eine gekrümmte Projektionsfläche aus einem einteiligen nahtlosen Substrat mit einer dreidimensionalen Krümmung.

### Beschreibung

Ausgehend von dieser Situation ist es eine Aufgabe, ein Fahrzeug mit einer Anzeigeeinrichtung und ein entsprechendes Verfahren bereitzustellen, das diese Nachteile nicht aufweist.

Die Aufgabe wird durch die Merkmale der unabhängigen Ansprüche gelöst. Vorteilhafte Ausgestaltungen sind in den Unteransprüchen angegeben.

Demnach wird die Aufgabe durch ein Fahrzeug insbesondere mit einer Fahrerkabine für einen Fahrer des Fahrzeugs und einer Anzeigeeinrichtung gelöst, wobei die Anzeigeeinrichtung eine sich in horizontaler und vertikaler Richtung erstreckende Projektionsfläche und einen Projektor umfasst, der dazu eingerichtet ist, eine Projektion auf die Projektionsfläche zu projizieren, wobei die Projektionsfläche in horizontaler Richtung gekrümmt ist und den Fahrer insbesondere in der Fahrerkabine in horizontaler Richtung um wenigstens 100 Grad umgibt. Eine alternative Lösung besteht in einem Fahrzeug insbesondere mit einer Fahrerkabine für einen Fahrer des Fahrzeugs und einer Anzeigeeinrichtung, wobei die Anzeigeeinrichtung eine sich in horizontaler und vertikaler Richtung erstreckende Projektionsfläche und einen Projektor umfasst, der dazu eingerichtet ist, eine Projektion auf die Projektionsfläche zu projizieren, wobei die Projektionsfläche in horizontaler Richtung gekrümmt ist.

Ein wesentlicher Aspekt der vorgeschlagenen Lösung liegt darin, dass die Projektionsfläche in horizontale Richtung gekrümmt ist und den Fahrer insbesondere in der Fahrerkabine in horizontaler Richtung um wenigstens 100 Grad umgibt. Die Projektionsfläche erstreckt sich in horizontaler und vertikaler Richtung, wobei die Krümmung der Projektionsfläche vom Standpunkt des Fahrers bevorzugt konkav ist. Durch die Krümmung der Projektionsfläche ist die Betrachtung der Projektionsfläche für den Fahrer angenehmer, da die gekrümmte Form der optischen Wahrnehmung des menschlichen Auges näherkommt, als wenn die Projektionsfläche nicht gekrümmt wäre. Insbesondere in Randbereichen der Projektionsfläche kommt dieser Vorteil der Krümmung zum Tragen, da der Abstand zwischen dem Fahrer und den Randbereichen der Projektionsfläche im Wesentlichen gleich groß ist wie zwischen dem Fahrer und dem Mittleren Bereich der Projektionsfläche. Die Krümmung sowie die Ausdehnung derart, dass die Projektionsfläche in horizontaler Richtung den Fahrer um wenigstens 100 Grad umgibt, vereinfachen die Informationsaufnahme des Fahrers. Bevorzugt umgibt die Projektionsfläche den Fahrer um 120, 150, 180, 270, 300 oder 360 Grad.

Das Fahrzeug kann ein beliebiges Fahrzeug sein, vorzugsweise ein Fahrzeug, das im gewerblichen und/oder logistischen Bereich eingesetzt wird, beispielsweise ein Lastwagen, ein Lieferwagen oder ein Baufahrzeug. Das Fahrzeug kann zum Güterumschlag eingesetzt werden.

Das Fahrzeug umfasst bevorzugt eine Fahrerkabine für den Fahrer des Fahrzeugs. Die Anzeigeeinrichtung ist bevorzugt an der Fahrerkabine befestigt, wobei die Anzeigeeinrichtung lösbar oder fix mit der Fahrerkabine verbunden sein kann. Die Projektionsfläche befindet sich also bevorzugt nicht, wie beispielsweise bei Augmented-Reality-Brillen, direkt am Kopf des Fahrers, so dass durch die Anzeigeeinrichtung keine Belastung des Kopfbereiches des Fahrers hervorgerufen wird. Der Fahrer wird durch die Anzeigeeinrichtung nicht in seiner Bewegungsfreiheit eingeschränkt oder muss eine derartige Augmented-Reality-Brille tragen.

Die Anzeigeeinrichtung umfasst den Projektor, der dazu eingerichtet ist, eine Projektion auf die Projektionsfläche zu projizieren. Der Projektor kann Standbilder oder auch bewegte Bilder wie Animationen auf die Projektionsfläche projizieren.

In einer bevorzugten Weiterbildung ist vorgesehen, dass die Projektionsfläche eine transparente Projektionsfläche umfasst. Die Anzeigeeinrichtung umfasst bevorzugt eine transparente Projektionsfläche, wie beispielsweise bei einem Head-Up-Display (HUD). Eine transparente Projektionsfläche hat den Vorteil, dass der Fahrer die Umgebung durch die Projektionsfläche hindurch wahrnehmen kann und somit nicht in seiner Wahrnehmung der Umgebung durch die Projektionsfläche eingeschränkt wird. Des Weiteren ermöglicht eine transparente Projektionsfläche besonders einfach, die dargestellte Projektion in einen räumlichen Kontext einzubetten. Bei einer transparenten Projektionsfläche sieht der Fahrer in der Regel die gespiegelte bildgebende Information als virtuelles Bild und gleichzeitig die reale Umgebung hinter der Projektionsfläche. Das erzeugte virtuelle Bild kann so projiziert werden, dass es mit einem Auge oder mit beiden Augen erfasst werden kann.

Grundsätzlich kann die Projektionsfläche aus jedem transparenten Material bestehen. Bevorzug umfasst die Projektionsfläche eine Projektionsfläche aus Plexiglas oder aus einem anderen transparenten Plastik. Dies hat den Vorteil, dass die Krümmung der Projektionsfläche sehr leicht umsetzbar ist, verglichen mit einem starren Material wie beispielsweise Glas. Des Weiteren können durch eine solche Ausgestaltung Herstellungskosten eingespart werden.

In einer bevorzugten Weiterbildung ist vorgesehen, dass eine Ausdehnung der Projektionsfläche in horizontaler Richtung im Wesentlichen einer horizontalen Ausdehnung eines Umblickfeldes des Fahrers entspricht. Unter Umblickfeld ist im Sinne der Anmeldung die Gesamtheit aller Blickfelder bei bewegtem Kopf und Körper aber unveränderter Standposition und/oder Sitzposition des Fahrers zu verstehen. Das Umblickfeld beträgt in seiner horizontalen Ausdehnung beispielsweise etwa 270 Grad, abhängig von der Sitzposition und der Beweglichkeit des Fahrers. Dadurch, dass die Ausdehnung der Projektionsfläche in horizontaler Richtung im Wesentlichen gleich groß ist, in diesem Beispiel also auch etwa 270 Grad beträgt, liegt die Projektionsfläche auch bei einer Bewegung des Kopfes, wie einem Schulterblick, immer im Blickfeld des Fahrers. Somit ist die Projektionsfläche in ihrer Ausgestaltung hinsichtlich der Ausdehnung und Krümmung an eine Drehbewegung des Kopfes des Fahrers angepasst. Dadurch muss ein Fahrer seinen Kopf nicht in Richtung Windschutzscheibe oder Armaturenbrett drehen, um Informationen aufzunehmen, da durch die Projektion auf die gekrümmte Projektionsfläche die Informationen im Blickfeld des Fahrers sind. Weiterhin können durch diese Ausgestaltung der Projektionsfläche Informationen in einem räumlichen Kontext dargestellt werden. Der Fahrer kann zum Beispiel beim Rückwärtsfahren, während des Schulterblicks nach hinten, über Gefahrenstellen informiert werden. Somit vereinfachen sich die Arbeitsabläufe des Fahrers, was die Arbeitssicherheit erhöht und zu einer Erhöhung der Produktivität beiträgt.

Bevorzugt beträgt die vertikale Ausdehnung der Projektionsfläche etwa 10 bis 40 cm, besonders bevorzugt etwa 15 bis 20 cm. Weiter bevorzugt ist die horizontale Ausdehnung der Projektionsfläche wesentlich größer als die vertikale Ausdehnung. Bei der Projektionsfläche handelt es sich bevorzugt um eine relativ lange und schmale im Wesentlichen rechteckförmige Fläche, die entlang ihrer längeren bzw. horizontalen Ausdehnung und/oder in Längsrichtung gekrümmt ist.

Im Zusammenhang mit dem Projizieren der Projektion auf die Projektionsfläche ist in einer bevorzugten Weiterbildung vorgesehen, dass das Fahrzeug eine Sensorikeinrichtung umfasst, wobei die Sensorikeinrichtung zum Bestimmen einer Blickrichtung und/oder Kopfausrichtung des Fahrers eingerichtet ist, und der Projektor dazu eingerichtet ist, die Projektion in Blickrichtung und/oder Kopfausrichtung des Fahrers zu projizieren. Die Projektion wird bevorzugt in Abhängigkeit der Blickrichtung und/oder Kopfausrichtung des Fahrers an eine geeignete Stelle der Projektionsfläche projiziert. Die Stelle auf der Projektionsfläche ist geeignet, wenn sie sich im aktuellen Blickfeld des Fahrers befindet. Wenn der Fahrer beispielsweise während eines Manövers rückwärtsfährt, ist, gegeben durch die Kopfausrichtung des Fahrers, die Blickrichtung nicht in Richtung Windschutzscheibe, sondern nach hinten. Dementsprechend hätte eine Projektion in Richtung Windschutzscheibe auch keinen Nutzten für den Fahrer. Hingegen kann durch eine Projektion in Blickrichtung des Fahrers, in diesem Beispiel also nach hinten, dem Fahrer kontextbezogene Information zur Verfügung gestellt werden, die der Fahrer unmittelbar oder nahezu sofort wahrnimmt.

Die Sensorikeinrichtung zum Bestimmen der Blickrichtung und/oder Kopfausrichtung des Fahrers umfasst beispielsweise eine Kamera, die auf den Fahrer gerichtet ist. Aufgrund der Kamerabilder lässt sich die Kopfausrichtung und/oder Blickrichtung des Fahrers bestimmen. Alternativ oder zusätzlich kann ein Bewegungssensor und/oder Beschleunigungssensor am Kopf des Fahrers verwendet werden. Dieser kann beispielsweise die Lageänderung des Kopfes und somit die Kopfausrichtung bestimmen. Weiter bevorzugt ist die Sensorikeinrichtung dazu eingerichtet, zusätzlich eine vertikale Position des Kopfes des Fahrers in dem Fahrzeug und insbesondere in der Fahrerkabine zu bestimmen.

Besonders bevorzugt ist der Projektor dazu eingerichtet, in Abhängigkeit der Position und/oder der Ausrichtung des Fahrzeugs kontextbezogene Information auf die Projektionsfläche zu projizieren. Hierzu ist das Fahrzeug beispielsweise mit einem Positionsbestimmungssystem ausgestattet, so dass die Position des Fahrzeugs ermittelt werden kann. Weiterhin kann das Fahrzeug mit einem Lagesensor ausgestattet sein, um die Ausrichtung des Fahrzeugs zu ermitteln. So können in Kombination mit der Kopfrichtung und/oder Blickrichtung des Fahrers Informationen auf die Projektionsfläche projiziert werden, die einen Bezug zur aktuellen Umgebung des Fahrzeugs haben.

Weiterhin ist der Projektor bevorzugt dazu eingerichtet, die kontextbezogene Information derart zu projizieren, dass im Wesentlichen keine oder nur eine geringe Akkommodation seitens des Fahrers notwendig ist, um die Information deutlich wahrzunehmen. Beispielsweise konzentriert sich der Fahrer bei einem rückwärtsgerichteten Fahrmanöver auf den zurückzulegenden Fahrweg, so dass der Fahrer beispielsweise auf einen Punkt im Abstand von etwa 5 Meter Entfernung auf den Fahrweg fokussiert. Wenn nun Richtungspfeile als Information auf die Projektionsfläche projiziert werden, erscheint das virtuelle Bild dieser Richtungspfeile bevorzugt ebenso in 5 Meter Entfernung auf dem Fahrweg. Dementsprechend ist der Aufwand für die Akkomodation, also das Anpassen der Brechkraft des Auges, um das virtuelle Bild scharf auf der Netzhautebene des Auges abzubilden, gering. Weiterhin herrschen bei der Fokussierung auf das virtuelle Bild die gleichen Lichtverhältnisse, so dass der Aufwand für die Adaptation klein ist. Somit kann der Fahrer die dargestellte Projektion schnell erfassen, ohne dass es zu Ermüdungserscheinungen der Augen kommt. Des Weiteren ist bevorzugt vorgesehen, dass der Projektor dazu eingerichtet ist, in Abhängigkeit der Umgebungshelligkeit die Helligkeit der Projektion anzupassen. Dies erleichtert ebenfalls die Informationsaufnahme für den Fahrer erheblich.

Zwecks Einbindung der Projektionsfläche in das Fahrzeug ist in einer bevorzugten Weiterbildung vorgesehen, dass die Projektionsfläche in horizontaler Richtung den Fahrer in dem Fahrzeug und insbesondere in der Fahrerkabine im Wesentlichen hufeisenförmig, ringsegmentförmig, kreissegmentförmig, ringförmig oder kreisförmig umgibt. Die Projektionsfläche kann den Fahrer kreisförmig umgeben, wobei in diesem Fall der Fahrer von der Projektionsfläche umschlossen ist. Alternativ ist es möglich, dass die Projektionsfläche den Fahrer ringförmig umschließt. In beiden Fällen wird der Fahrer bevorzugt 360 Grad von der Projektionsfläche umgeben. Dies hat den Vorteil, dass unabhängig davon in welche horizontale Richtung der Fahrer blickt, die Projektionsfläche immer im Blickfeld des Fahrers ist. Alternativ ist es möglich, dass die Projektionsfläche den Fahrer nicht vollständig umschließt, sondern die Projektionsfläche den Fahrer im Wesentlichen hufeisenförmig, ringsegmentförmig oder kreissegmentförmig umgibt. In diesem Fall ist ein Anteil der 360 Grad nicht von einer Projektionsfläche umgeben. Bevorzugt umgibt die Projektionsfläche in horizontaler Richtung den Fahrer insbesondere in der Fahrerkabine im Wesentlichen hufeisenförmig oder U-förmig. Dies hat den Vorteil, dass sich die Projektionsfläche besonders einfach in die Fahrerkabine bzw. das Fahrzeug integrieren lässt. Bevorzugt zeigt dabei die Öffnung der Hufeisenform bzw. U-Form nicht in Richtung der Windschutzscheibe sondern nach hinten.

In einer bevorzugten Weiterbildung ist vorgesehen, dass der Projektor derart zur Projektionsfläche angeordnet ist, dass ein Abstand vom Projektor zur Projektionsfläche, aufgrund der Krümmung der Projektionsfläche, im Wesentlichen an allen Punkten der Projektionsfläche gleich groß ist. Bei einer im Wesentlichen hufeisenförmig, ringsegmentförmig, kreissegmentförmig, ringförmig oder kreisförmig gekrümmten Projektionsfläche befindet sich der Projektor im Wesentlichen in der Mitte des Kreises, Ringes, Hufeisens, Ringsegmentes oder Kreissegmentes. Alternativ kann sich der Projektor innerhalb einer vertikalen Achse, die durch die Mitte des Kreises, Ringes, Hufeisens, Ringsegmentes oder Kreissegmentes führt, befinden und somit oberhalb oder unterhalb der Ebene des Kreises, Ringes, Hufeisens, Ringsegmentes oder Kreissegmentes angeordnet sein, die von der Krümmung der Projektionsfläche gebildet wird. Die Anordnung vereinfacht das Projizieren auf die Projektionsfläche deutlich, da der Abstand zwischen Projektor und Projektionsfläche im Wesentlichen gleichbleibend ist, unabhängig davon auf welchen Anteil der Projektionsfläche projiziert wird.

Grundsätzlich kann die Anzeigeeinrichtung an unterschiedlichen Stellen des Fahrzeugs oder der Fahrerkabine angebracht sein. In einer bevorzugten Weiterbildung ist allerdings vorgesehen, dass die Projektionsfläche und/oder der Projektor an einem Dach und/oder an einem Rahmen des Fahrzeugs und/oder der Fahrerkabine angebracht ist. Bevorzugt sind die Projektionsfläche und der Projektor am Dach und/oder am Rahmen des Fahrzeugs und/oder der Fahrerkabine angebracht. Somit befindet sich insbesondere die Projektionsfläche in einer ähnlichen Höhe wie der Kopf des Fahrers des Fahrzeugs. Hierdurch ist die Projektionsfläche im Blickfeld des Fahrers, insbesondere innerhalb des vertikalen Blickfeldes des Fahrers. Der Fahrer kann, ohne den Blick weit nach oben oder unten zu schweifen, die Projektionsfläche sehen.

Zwecks einfacher Handhabung ist in einer bevorzugten Weiterbildung vorgesehen, dass die Projektionsfläche und/oder der Projektor vertikal verstellbar und/oder verschiebbar ist. Bevorzugt lässt sich die Projektionsfläche und/oder der Projektor in der Höhe verstellen. Um eine ausreichende Sichtbarkeit der Projektionsfläche für den Fahrer zu ermöglichen, befindet sich die Projektionsfläche bevorzugt in etwa auf oder leicht über Augenhöhe des Fahrers. Dadurch, dass die Projektionsfläche vertikal verstellbar und/oder verschiebbar ist, kann sie an unterschiedlich große Fahrer angepasst werden und unabhängig der Körpergröße des Fahrers für den Fahrer ausreichend sichtbar sein. Des Weiteren kann die Projektionsfläche für den Ein- und Ausstieg des Fahrers in der Höhe nach oben verstellt werden, so dass eine Verletzungsgefahr verringert wird. Bevorzugt ist auch der Projektor vertikal verstellbar und/oder verschiebbar, um die Höhe des Projektors der Höhe der Projektionsfläche anzupassen. Bevorzugt wird die Projektionsfläche und/oder der Projektor mittels einer Steuereinheit vertikal verstellt. Dies kann vollautomatisch durchgeführt werden oder der Fahrer kann beispielsweise die Steuereinheit von Hand bedienen.

Während des Gebrauchs des Fahrzeugs kann es beispielsweise durch unebenes Gelände, oder bedingt durch den Transport von Gütern, zu Stößen oder Schwingungen des Fahrzeuges kommen. Diese können sich grundsätzlich auf die am Fahrzeug angebrachte Anzeigeeinrichtung übertragen, was zu einer verwackelten Darstellung der Projektion führen kann. In diesem Zusammenhang ist in einer bevorzugten Weiterbildung vorgesehen, dass die Projektionsfläche und/oder der Projektor derart am Fahrzeug angebracht ist, dass Schwingungen und/oder Stöße gedämpft und/oder abgefedert werden. Die Anbringung der Anzeigeeinrichtung am Fahrzeug findet bevorzugt mittels Stoßdämpfer oder anderer Federsysteme statt, so dass Schwingungen und/oder Stöße abgefedert bzw. gedämpft werden. Ohne diese Maßnahmen würden Schwingungen zu langsam abklingen und die Darstellung der Projektion verwackelt sein. Beispielsweise kann eine hydraulische Dämpfung oder eine Reibungsdämpfung verwendet werden. Bevorzugt werden hydraulische Teleskopstoßdämpfer für die Aufhängung der Projektionsfläche und/oder des Projektors an dem Fahrzeug und insbesondere an der Fahrerkabine verwendet. Besonders bevorzugt umfasst die Aufhängung der Projektionsfläche und/oder des Projektors am Fahrzeug eine kardanische Aufhängung. Alternativ können Drehstoßdämpfer, elektromechanische Dämpfersystem oder Luftfederdämpfer eingesetzt werden, in denen das Medium Luft sowohl Feder- als auch Dämpferaufgaben übernimmt.

In Zusammenhang mit der Projektion in Blickrichtung und/oder Kopfausrichtung des Fahrers ist in einer bevorzugten Weiterbildung vorgesehen, dass der Projektor um eine vertikale Achse drehbar ist. Besonders bevorzugt entspricht die Drehachse des Projektors dabei der Achse der Aufhängung des Projektors. Somit lässt sich durch Drehen des Projektors um seine Achse der Aufhängung auf einfache Weise auf unterschiedliche Bereiche der Projektionsfläche projizieren. Die Drehbewegung des Projektors kann beispielsweise mit einem Elektromotor angetrieben werden.

In diesem Zusammenhang ist in einer bevorzugten Weiterbildung vorgesehen, dass die Anzeigeeinrichtung eine Steuereinheit umfasst, die den Projektor und/oder die Projektionsfläche steuert. Bevorzugt steuert die Steuereinheit die Drehbewegung des Projektors in Abhängigkeit der Blickrichtung/Kopfausrichtung des Fahrers. Weiter bevorzugt steuert die Steuereinheit das vertikale Verstellen und/oder Verschieben der Projektionsfläche und/oder des Projektors. Insbesondere steuert die die Steuereinheit das vertikale Verstellen und/oder Verschieben der Projektionsfläche und/oder des Projektors in Abhängigkeit der vertikalen Position des Kopfes des Fahrers in dem Fahrzeug und insbesondere der Fahrerkabine. Hierfür ist die Steuereinheit bevorzugt mit der Sensorikeinrichtung kommunikationstechnisch verbunden. Weiter bevorzugt ermittelt die Steuereinheit die zu projizierende Projektion derart, dass sie auf der gekrümmten Projektionsfläche nicht verzerrt dargestellt wird. Da die Krümmung der Projektionsfläche, beispielsweise bei einer hufeisenförmig gekrümmten Projektionsfläche, nicht an jeder Stelle der Projektionsfläche gleich groß ist, entzerrt die Steuereinheit die Projektion bevorzugt in Abhängigkeit der Projektionsrichtung. Die Steuereinheit ist bevorzugt kommunikationstechnisch mit einem Server und/oder einem Netzwerk verbunden. Hierüber wird der Steuereinheit beispielsweise die zu projizierende Information als Daten übermittelt. Weiterhin ist es möglich, dass die Steuereinheit mit einem Positionsbestimmungssystem und/oder einem Lagesensor kommunikationstechnisch verbunden ist, die die Position bzw. Lage des Flurförderzeugs bestimmen. Somit kann spezifische auf die Position und die Ausrichtung des Flurförderzeugs abgestimmte Information in räumlichem Kontext dem Fahrer bereitgestellt werden.

In einer bevorzugten Weiterbildung der Erfindung ist vorgesehen, dass das Fahrzeug ein Flurförderzeug, einen Radlader, einen Bagger, eine Landmaschine und/oder einen Lastkraftwagen umfasst. Ebenso kann das Fahrzeug als Flugzeugcockpit, als Schiff, als Traktor als Mähdrescher und/oder als Fernsteuerarbeitsplatz für Teleoperationen ausgeführt sein. Insbesondere bei letztgenannten Anwendungsgebieten erlaubt die vorgeschlagene Lösung eine beispielsweise weitaus verbesserte Steuerung oder auch eine verbesserte Navigation. Es handelt sich beim Fahrzeug bevorzugt nicht um einen Personenkraftwagen, sondern um ein Fahrzeug, das im gewerblichen/logistischen Bereich eingesetzt wird. Diese Art Fahrzeuge werden oft rückwärts gefahren oder führen komplexe Fahrmanöver mit häufigem Richtungswechsel durch. Des Weiteren werden mit diesen Fahrzeugen Aufgaben bewältigt, deren Umsetzungen stark von einer kontextbezogenen Informationsdarstellung profitieren. Ein Flurförderzeug kann ein zum horizontalen Transport von Gütern eingesetztes Fördermittel sein, wie beispielsweise ein Hubwagen, Schlepper, Radlader, Traktor oder Gabelstapler.

Die Aufgabe wird ferner durch ein Verfahren zum Darstellen einer Projektion auf einer Projektionsfläche für einen Fahrer eines Fahrzeugs insbesondere mit einer Fahrerkabine gelöst, wobei sich die Projektionsfläche in horizontale und vertikale Richtung erstreckt, in horizontaler Richtung gekrümmt ist und den Fahrer insbesondere in der Fahrerkabine und/oder in dem Fahrzeug in horizontaler Richtung wenigstens 100 Grad umgibt mit den Schritten:
d) Bestimmen einer Blickrichtung und/oder Kopfausrichtung des Fahrers auf die Projektionsfläche, und
f) Projizieren der Projektion in Blickrichtung und/oder Kopfausrichtung des Fahrers auf die Projektionsfläche.

Eine alternative Lösung liegt in einem Verfahren zum Darstellen einer Projektion auf einer Projektionsfläche für einen Fahrer eines Fahrzeugs mit einer Fahrerkabine, wobei sich die Projektionsfläche in horizontale und vertikale Richtung erstreckt, in horizontaler Richtung gekrümmt ist, mit den Schritten: Bestimmen einer Blickrichtung und/oder Kopfausrichtung des Fahrers auf die Projektionsfläche, und Projizieren der Projektion in Blickrichtung und/oder Kopfausrichtung des Fahrers auf die Projektionsfläche.

Das vorgeschlagene Verfahren zeichnet sich dadurch aus, dass die Projektion in Blickrichtung und/oder Kopfrichtung des Fahrers auf die gekrümmte Projektionsfläche projiziert wird. Bevorzugt wird die Blickrichtung und/oder Kopfausrichtung des Fahrers in Schritt d) mittels einer Sensorikeinrichtung, beispielsweise einer Kamera, bestimmt. Weiter bevorzugt wird in dem Verfahren in Schritt f) ein Projektor zum Projizieren der Projektion verwendet. Dies führt dazu, dass für den Fahrer die Projektion in einem Kontext zur Umgebung des Fahrzeugs angezeigt werden kann, so dass die Arbeitsabläufe für den Fahrer vereinfacht werden. Insbesondere muss der Fahrer für die Informationsaufnahme nicht seine Blickrichtung ändern, da sie in Blickrichtung und/oder Kopfausrichtung des Fahrers projiziert wird. Das Verfahren eignet sich besonders gut bei transparenten Projektionsflächen, da hierbei eine gute Einbettung der projizierten Information in den räumlichen Kontext stattfinden kann. Bevorzugt handelt es sich also um ein Verfahren zum Darstellen einer Projektion auf einer transparenten Projektionsfläche.

Gemäß einer bevorzugten Weiterbildung umfasst das Verfahren zusätzlich die folgenden Schritte:
b) Bestimmen einer vertikalen Position des Kopfes des Fahrers in dem Fahrzeug und insbesondere in der Fahrerkabine, und
c) Vertikales Verstellen und/oder Verschieben der Projektionsfläche und/oder des Projektors in Abhängigkeit der vertikalen Position des Kopfes des Fahrers.

Hierbei ist bevorzugt vorgesehen, dass in Schritt b) die Sensorikeinrichtung die vertikale Position des Kopfes des Fahrers in dem Fahrzeug und insbesondere in der Fahrerkabine erfasst. Daraufhin findet in Schritt c) eine Anpassung der vertikalen Position der Projektionsfläche und/oder Projektors an die Position des Kopfes und somit an die Körpergröße des Fahrers statt. Bevorzugt wird die Projektionsfläche und/oder der Projektor mittels der Steuereinheit vertikal verstellt. Dies kann vollautomatisch durchgeführt werden oder der Fahrer kann beispielsweise die Steuereinheit von Hand bedienen und so die vertikale Position der Projektionsfläche und/oder des Projektors anpassen. Diese Schritte ermöglichen, dass die Projektionsfläche in der Höhe so eingestellt werden kann, dass sie im Blickfeld des Fahrers ist, unabhängig der Körpergröße des Fahrers.

In einer bevorzugten Weiterbildung umfasst das Verfahren zusätzlich die folgenden Schritte:
e) Drehen des Projektors in Blickrichtung und/oder Kopfausrichtung des Fahrers, und
g) Vertikales Verstellen und/oder Verschieben der Projektionsfläche und/oder des Projektors in eine Ausgangsposition.

Der Projektor wird in die Blickrichtung und/oder Kopfausrichtung des Fahrers gedreht, bevor in Schritt f) das Projizieren der Projektion in Blickrichtung und/oder Kopfausrichtung des Fahrers auf die Projektionsfläche durchgeführt wird. Weiterhin ist vorgesehen, dass, nachdem die Projektion auf der Projektionsfläche projiziert wurde, die Projektionsfläche und/oder der Projektor in die Ausgangsposition vertikal verstellt wird. Als Ausgangsposition ist bevorzugt eine Position vorgesehen, die dem Fahrer ein einfaches Ein- und Aussteigen aus dem Flurförderzeug ermöglicht, ohne dass der Fahrer Gefahr läuft, sich den Kopf an der Projektionsfläche oder dem Projektor zu verletzen. Beispielsweise kann die Ausgangsposition eine Position direkt unter dem Dach des Fahrzeugs und insbesondere der Fahrerkabine sein. Die Schritte e) und g) werden bevorzugt mittels der Steuereinheit durchgeführt.

In einer bevorzugten Weiterbildung ist vorgesehen, dass das Verfahren zusätzlich den folgenden Schritt umfasst:
a) Bestimmen einer Anwesenheit des Fahrers in dem Fahrzeug und insbesondere in der Fahrerkabine, wobei
das Verfahren automatisiert nach Starten des Fahrzeugs durch den Fahrer abläuft.

Es handelt sich um ein Verfahren, das automatisiert abläuft. Das Verfahren wird mit dem Starten des Fahrzeugs gestartet, beispielsweise über Betätigung des Zündschlüssels oder wenn ein anderer Sicherheitsmechanismus des Fahrzeugs ausgelöst wird. Grundsätzlich kann direkt darüber bestimmt werden, ob ein Fahrer in dem Fahrzeug und insbesondere in der Fahrerkabine anwesend ist. Alternativ kann die Anwesenheitsbestimmung analog zu Schritt b) über die Sensorikeinrichtung erfolgen. Weiter alternativ können auch andere Sensoren, beispielsweise ein Sitzsensor im Fahrzeug, eingesetzt werden.

### Kurze Beschreibung der Zeichnungen

Nachfolgend wird die vorgeschlagene Lösung unter Bezugnahme auf die anliegenden Zeichnungen anhand bevorzugter Ausführungsbeispiele näher erläutert.

In den Zeichnungen zeigen
- Fig. 1: eine schematische Ansicht eines Flurförderzeugs aus dem Stand der Technik,
- Fig. 2: eine schematische Draufsicht auf ein Fahrzeugmit einer Fahrerkabine für einen Fahrer des Fahrzeugsund einer Anzeigeeinrichtung gemäß einem bevorzugten Ausführungsbeispiel,
- Fig. 3: eine weitere schematische Ansicht des Fahrzeugsaus Figur 2 gemäß einem bevorzugten Ausführungsbeispiel,
- Fig. 4: eine detaillierte Ansicht der Fahrerkabine des Fahrzeugsaus Figur 2 gemäß einem bevorzugten Ausführungsbeispiel, und
- Fig. 5: ein Flussdiagramm mit den Schritten des Verfahrens zum Darstellen einer Projektion auf einer transparenten Projektionsfläche für einen Fahrer eines Fahrzeugs gemäß einem bevorzugten Ausführungsbeispiel.

### Detaillierte Beschreibung der Ausführungsbespiele

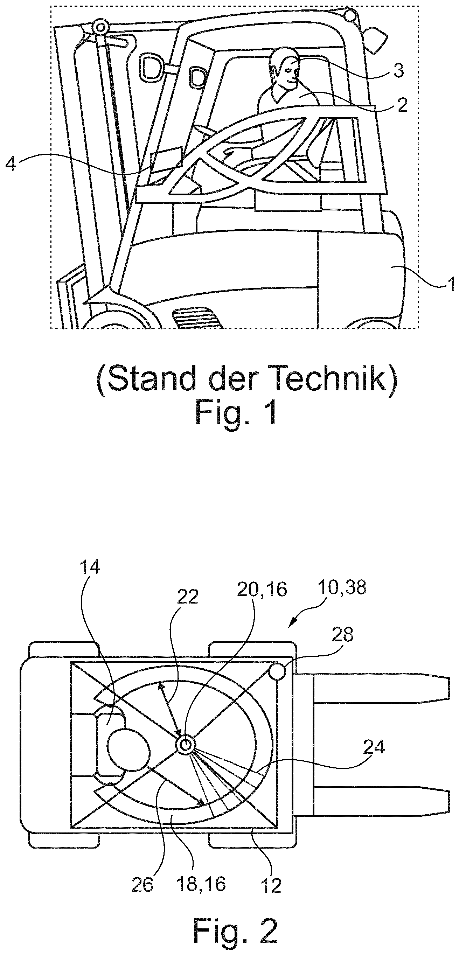

Figur 1 zeigt ein Flurförderzeug 1 aus dem Stand der Technik. Der Fahrer 2 des Flurförderzeugs muss aufgrund der besonderen Anforderung seiner Tätigkeiten oft Richtungswechsel durchführen oder größere Distanzen rückwärts zurücklegen. Hierfür dreht der Fahrer 2 den Kopf 3, um die für die korrekte Durchführung des Fahrmanövers und einer damit verbundenen Aufgabe notwendigen Umgebungsinformationen aufnehmen zu können. Informationen, die dem Fahrer 2 auf einem Display 4 am Armaturenbrett zur Verfügung gestellt werden, befinden sich dabei nicht mehr im Blickfeld des Fahrers 2.

Figur 2 zeigt eine schematische Draufsicht auf ein Fahrzeug10 mit einer Fahrerkabine 12 für einen Fahrer 14 des Fahrzeugs 10 und einer Anzeigeeinrichtung 16 gemäß einem bevorzugten Ausführungsbeispiel. Im hier bevorzugten Ausführungsbeispiel umfasst das Fahrzeug 10 ein Flurförderzeug 38. Die Anzeigeeinrichtung 16 umfasst eine Projektionsfläche 18 sowie einen Projektor 20. Die Projektionsfläche 18 ist in horizontaler Richtung gekrümmt, was durch die Draufsicht besonders gut zu erkennen ist. Die Projektionsfläche 18 umgibt somit den Fahrer 14 des Flurfahrzeugs 38 in der Fahrerkabine 12 im Wesentlichen hufeisenförmig, wobei sich die Sitzposition des Fahrers 14 im Wesentlichen an der Stelle der Öffnung des Hufeisens befindet. Der Projektor 20 ist im Wesentlichen in der Mitte der hufeisenförmigen Projektionsfläche 18, so dass der Abstand 22 von Projektor 20 zur Projektionsfläche 18 im Wesentlichen an allen Stellen der Projektionsfläche 20 gleich groß ist.

Der Projektor 20 ist dazu eingerichtet, eine Projektion 24 auf die Projektionsfläche 18 zu projizieren, wobei die Projektion 18 in Blickrichtung/Kopfausrichtung 26 des Fahrers 14 projiziert wird. Hierfür wird über eine Sensorikeinrichtung 28, hier eine Kamera, die Blickrichtung/Kopfausrichtung 26 des Fahrers 14 bestimmt. In diesem Ausführungsbeispiel befindet sich die Kamera in der Ecke der Fahrerkabine 12.

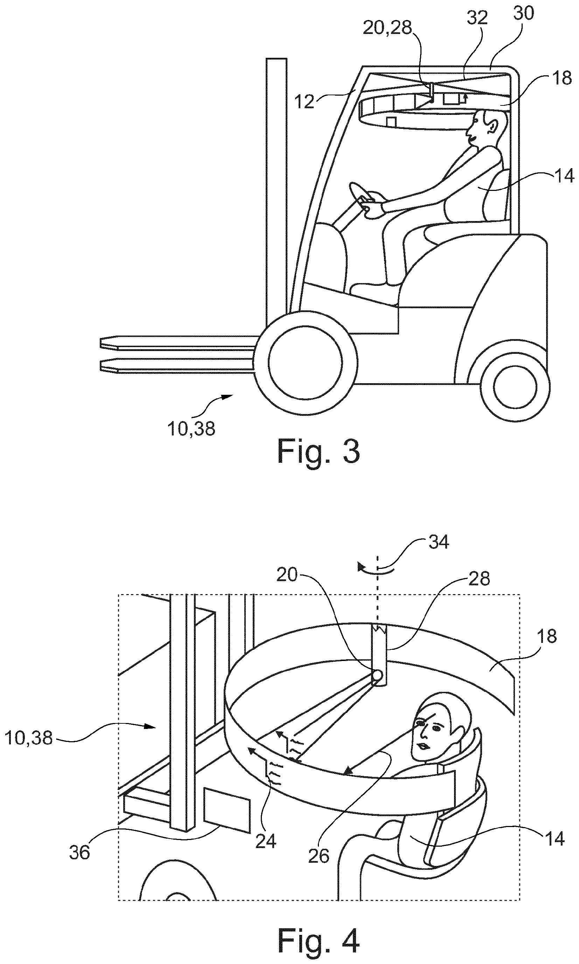

Figur 3 zeigt eine weitere schematische Ansicht des Flurförderzeugs 38, wobei insbesondere zu erkennen ist, dass die Projektionsfläche 18 am Dach 30 der Fahrerkabine 12 des Flurförderfahrzeugs 38 angebracht ist. Die Projektionsfläche 18 befindet sich etwa auf bzw. etwas über Augenhöhe des Fahrers 14. Die Projektionsfläche 18 besteht aus transparentem Plexiglas, so dass der Fahrer 14 nicht in seiner Sicht behindert wird. Die vertikale Ausdehnung der Projektionsfläche 18 beträgt etwa 15-20 cm. Die Aufhängung 32 der Projektionsfläche 18 und des Projektors 20 am Dach 30 der Fahrerkabine 12 verfügt über einen Mechanismus aus Federn und Teleskopdämpfern und ist stufenlos in der Höhe verstellbar. Durch die Aufhängung 32 verlaufen notwendigen Strom- und Datenkabel, wobei der Strom dem Fahrzeugsystem entnommen wird. In diesem Ausführungsbeispiel befindet sich die Kamera der Sensorikeinrichtung 28 direkt beim Projektor 22.

Figur 4 zeigt eine detaillierte Ansicht der Fahrerkabine 12 des Flurförderzeugs 38, gemäß einem bevorzugten Ausführungsbeispiel. Der Projektor 20 kann mittels eines E-Motors gedreht werden und so alle Bereiche der Projektionsfläche 18 anstrahlen. Die Drehachse 34 des Projektors 18 entspricht dabei der Achse der Aufhängung des Projektors 18. In diesem Ausführungsbeispiel sitzt die Sensorikeinrichtung 28, die von einer Kamera gebildet wird, direkt am unteren Ende des Projektors 18 und ist fix auf den Kopf des Fahrers 14 ausgerichtet. Die Sensorikeinrichtung 28 registriert Änderungen der Kopfposition des Fahrers 14. Ein im Fahrzeug untergebrachte Steuereinheit 36 steuert die Höhe des Projektors 20 und der Projektionsfläche 18. Weiterhin steuert die Steuereinheit 36 die Drehbewegung des Projektors 20 in Abhängigkeit der Blickrichtung/Kopfausrichtung 26 des Fahrers 14. Hierfür ist die Steuereinheit 36 mit der Sensorikeinrichtung 28 kommunikationstechnisch verbunden.

Weiterhin ist die Steuereinheit 36 kommunikationstechnisch mit einem Server und/oder einem Netzwerk, beispielsweise einer IoT-Plattform (Internet of Things), verbunden. Der Steuereinheit 36 werden darüber die zu projizierende Informationen als Daten übermittelt. In diesem Ausführungsbeispiel werden der Steuereinheit 36 in Abhängigkeit der Position und/oder der Ausrichtung des Flurförderzeugs 38 kontextbezogene Informationen zur Verfügung gestellt, die dann auf die Projektionsfläche 18 projiziert werden. Hier in Figur 4 ist als Projektion 24 ein Richtungspfeil gezeigt.

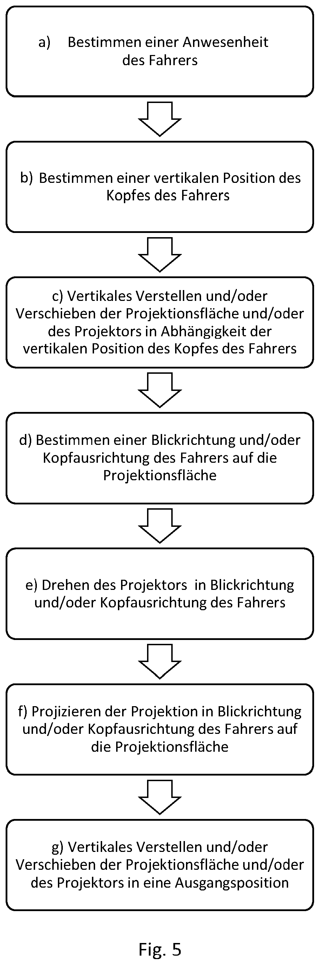

Figur 5 zeigt ein Flussdiagramm mit den Schritten des Verfahrens zum Darstellen einer Projektion 24 auf einer transparenten Projektionsfläche 18 für einen Fahrer 14 eines Fahzeugs 10 gemäß einem bevorzugten Ausführungsbeispiel. In diesem Ausführungsbeispiel wird das Verfahren mit dem Flurförderzeug 38 aus Figur 2 durchgeführt. Das Verfahren umfasst die in Figur 5 gezeigten Schritte a) bis g).

In Schritt a) wird bestimmt, ob der Fahrer 14 in der Fahrerkabine 12 des Flurförderzeugs 38 anwesende ist. Dies geschieht über die Sensorikeinrichtung 28, hier eine Kamera. Im bejahenden Fall, wird in einem weiteren Schritt b) wird mittels der Sensorikeinrichtung 28 die vertikale Position des Kopfes des Fahrers 14 in der Fahrerkabine 12 erfasst.

Daraufhin findet in Schritt c) mittels der Steuereinheit 36 eine Anpassung der vertikalen Position der Projektionsfläche 18 und/oder Projektors 20 an die Position des Kopfes des Fahrers 14 und somit an die Körpergröße des Fahrers 14 statt. Die Projektionsfläche 18 fährt also beispielsweise von ihrer Aufhängung 32 direkt unter dem Dach 30 des Flurförderzeugs 38 herunter, bis sie etwas über Augenhöhe des Fahrers 14 zu liegen kommt.

In einem weiteren Schritt d) wird ebenfalls mittels der Sensorikeinrichtung 28 die Blickrichtung und/oder Kopfausrichtung 26 des Fahrers 14 auf die Projektionsfläche 18 bestimmt.

Aufgrund der Blickrichtung und/oder Kopfausrichtung 26 wird in Schritt e) mittels der Steuereinheit 36 der Projektor 20 in die Blickrichtung und/oder Kopfausrichtung 26 des Fahrers 14 gedreht, so dass der Projektor 20 in Schritt f) eine Projektion 24 in Blickrichtung und/oder Kopfausrichtung 26 des Fahrers 14 auf die Projektionsfläche 18 projiziert. Die Projektion 24 kommt so direkt im Blickfeld des Fahrers zu liegen, so dass die Informationsaufnahme für den Fahrer 14 sehr leicht ist.

Um dem Fahrer 24 das Aussteigen aus dem Flurförderzeug 38 zu erleichtern, wird in einem weiteren Schritt g) die Projektionsfläche 18 und/oder der Projektor 20 in die Ausgangsposition vertikal verstellt, wobei in diesem Ausführungsbeispiel die Ausgangsposition direkt unter dem Dach 30 der Fahrerkabine 12 ist. Analog zu Schritt c) wird auch Schritt g) mittels der Steuereinheit 36 durchgeführt.

**Bezugszeichenliste**

| | |
|---|---|
| Flurförderzeug (Stand der Technik) | 1 |
| Fahrer (Stand der Technik) | 2 |
| Kopf (Stand der Technik) | 3 |
| Display (Stand der Technik) | 4 |
| Fahrzeug | 10 |
| Fahrerkabine | 12 |
| Fahrer | 14 |
| Anzeigeeinrichtung | 16 |
| Projektionsfläche | 18 |
| Projektor | 20 |
| Abstand | 22 |
| Projektion | 24 |
| Blickrichtung/Kopfausrichtung | 26 |
| Sensorikeinrichtung | 28 |
| Dach | 30 |
| Aufhängung | 32 |
| Drehachse | 34 |
| Steuereinheit | 36 |
| Flurförderzeug | 38 |

## Patentansprüche

1. Fahrzeug (10) mit einer Anzeigeeinrichtung (16) für einen Fahrer (14) des Fahrzeugs (10), wobei
die Anzeigeeinrichtung (16) eine sich in horizontaler und vertikaler Richtung erstreckende Projektionsfläche (18) und einen Projektor (20) umfasst, der dazu eingerichtet ist, eine Projektion (24) auf die Projektionsfläche (18) zu projizieren, wobei
die Projektionsfläche (18) in horizontaler Richtung gekrümmt ist und den Fahrer (14) in horizontaler Richtung um wenigstens 100 Grad umgibt,
**dadurch gekennzeichnet, dass** die Projektionsfläche (18) in ein von einer Fahrerkabine (12) umschlossenes Fahrzeuginneres integrert und an der Fahrerkabine (12) befestigt ist.

2. Fahrzeug (10) nach einem der vorhergehenden Ansprüche, wobei das Fahrzeug (10) eine Fahrerkabine (12) aufweist und die Projektionsfläche (18) den Fahrer (14) in der Fahrerkabine (12) umgibt und/oder die Projektionsfläche (18) eine transparente Projektionsfläche (18) umfasst.

3. Fahrzeug (10) nach einem der vorhergehenden Ansprüche wobei eine Ausdehnung der Projektionsfläche (10) in horizontaler Richtung im Wesentlichen einer horizontalen Ausdehnung eines Umblickfeldes des Fahrers (14) entspricht.

4. Fahrzeug (10) nach dem vorhergehenden Anspruch, mit einer Sensorikeinrichtung (28) eingerichtet zum Bestimmen einer Blickrichtung und/oder Kopfausrichtung (26) des Fahrers (14), wobei der Projektor (20) dazu eingerichtet ist, die Projektion (24) in Blickrichtung und/oder Kopfausrichtung (26) des Fahrers (14) zu projizieren.

5. Fahrzeug (10) nach einem der vorhergehenden Ansprüche wobei die Projektionsfläche (18) in horizontaler Richtung den Fahrer (14) im Wesentlichen hufeisenförmig, ringsegmentförmig, kreissegmentförmig, ringförmig oder kreisförmig umgibt.

6. Fahrzeug (10) nach einem der vorhergehenden Ansprüche wobei der Projektor (20) derart zur Projektionsfläche (18) angeordnet ist, dass ein Abstand (22) vom Projektor (20) zur Projektionsfläche (18) aufgrund der Krümmung der Projektionsfläche (18) im Wesentlichen an allen Punkten der Projektionsfläche (18) gleich groß ist.

7. Fahrzeug (10) nach einem der vorhergehenden Ansprüche wobei die Projektionsfläche (18) und/oder der Projektor (20) an einem Dach (30) und/oder an einem Rahmen des Fahrzeugs (10) angebracht ist.

8. Fahrzeug (10) nach einem der vorhergehenden Ansprüche wobei die Projektionsfläche (18) und/oder der Projektor (20) vertikal verstellbar und/oder verschiebbar ist.

9. Fahrzeug (10) nach einem der vorhergehenden Ansprüche wobei die Projektionsfläche (18) und/oder der Projektor (20) mittels Stoßdämpfer, Drehstoßdämpfer, hydraulische Dämpfung, Reibungsdämpfung, elektromechanische Dämpfersystem, Luftfederdämpfer und/oder anderer Federsysteme derart am Fahrzeug (10) angebracht ist, dass Schwingungen und/oder Stöße gedämpft und/oder abgefedert werden.

10. Fahrzeug (10) nach einem der vorhergehenden Ansprüche wobei die Anzeigeeinrichtung (16) eine Steuereinheit (36) umfasst, die den Projektor (20) und/oder die Projektionsfläche (18) steuert.

11. Fahrzeug (10) nach einem der vorhergehenden Ansprüche wobei das Fahrzeug (10) ein Flurförderzeug (38), einen Radlader, einen Bagger, eine Landmaschine und/oder einen Lastkraftwagen umfasst.

12. Verfahren zum Darstellen einer Projektion (24) auf einer Projektionsfläche (18) für einen Fahrer (14) eines Fahrzeugs (10), wobei sich die Projektionsfläche (18) in horizontale und vertikale Richtung erstreckt, in horizontaler Richtung gekrümmt ist, den Fahrer (14) in horizontaler Richtung um wenigstens 100 Grad umgibt und in ein von einer Fahrerkabine (12) umschlossenes Fahrzeuginnere integriert und an der Fahrerkabine (12) befestigt ist mit den Schritten:
d) Bestimmen einer Blickrichtung und/oder Kopfausrichtung (26) des Fahrers (14) auf die Projektionsfläche (18), und
f) Projizieren der Projektion (24) in Blickrichtung und/oder Kopfausrichtung (26) des Fahrers (14) auf die Projektionsfläche (18).

13. Verfahren nach vorherigem Anspruch, wobei das Verfahren zusätzlich die folgenden Schritte umfasst:
b) Bestimmen einer vertikalen Position des Kopfes des Fahrers (14) in dem Fahrzeug (10), und
c) Vertikales Verstellen und/oder Verschieben der Projektionsfläche (18) und/oder des Projektors (20) in Abhängigkeit der vertikalen Position des Kopfes des Fahrers (14).

14. Verfahren nach einem der vorherigen Ansprüche 12 und 13, wobei das Verfahren zusätzlich die folgenden Schritte umfasst:
e) Drehen des Projektors (20) in Blickrichtung und/oder Kopfausrichtung (26) des Fahrers (14), und
g) Vertikales Verstellen und/oder Verschieben der Projektionsfläche (18) und/oder des Projektors (20) in eine Ausgangsposition.

15. Verfahren nach einem der vorherigen Ansprüche 12 - 14, wobei das Verfahren zusätzlich den folgenden Schritt umfasst:
a) Bestimmen einer Anwesenheit des Fahrers (14) in dem Fahrzeug (10), und das Verfahren automatisiert nach Starten des Fahrzeugs (10) durch den Fahrer (14) abläuft.

## Claims

1. Vehicle (10) having a display device (16) for a driver (14) of the vehicle (10), wherein
the display device (16) comprises a projection surface (18) extending in a horizontal and vertical direction and a projector (20) that is designed to project a projection (24) onto the projection surface (18), wherein
the projection surface (18) is curved in the horizontal direction and surrounds the driver (14) by at least 100 degrees in the horizontal direction,
**characterized in that** the projection surface (18) is integrated into a vehicle interior enclosed by a driver's cabin (12) and is fastened to the driver's cabin (12) .

2. Vehicle (10) according to one of the preceding claims, wherein the vehicle (10) has a driver's cabin (12) and the projection surface (18) surrounds the driver (14) in the driver's cabin (12) and/or the projection surface (18) comprises a transparent projection surface (18) .

3. Vehicle (10) according to either of the preceding claims, wherein an extent of the projection surface (10) in the horizontal direction corresponds substantially to a horizontal extent of a direct field of view of the driver (14).

4. Vehicle (10) according to the preceding claim, having a sensor device (28) designed to determine a viewing direction and/or head orientation (26) of the driver (14), wherein the projector (20) is designed to project the projection (24) in the viewing direction and/or head orientation (26) of the driver (14).

5. Vehicle (10) according to one of the preceding claims, wherein the projection surface (18) surrounds the driver (14) in a substantially horseshoe-shaped, annular segment-shaped, circular segment-shaped, annular or circular manner in the horizontal direction.

6. Vehicle (10) according to one of the preceding claims, wherein the projector (20) is arranged with respect to the projection surface (18) such that a distance (22) from the projector (20) to the projection surface (18) is substantially equal at all points of the projection surface (18) owing to the curvature of the projection surface (18).

7. Vehicle (10) according to one of the preceding claims, wherein the projection surface (18) and/or the projector (20) are/is installed on a roof (30) and/or on a body of the vehicle (10).

8. Vehicle (10) according to one of the preceding claims, wherein the projection surface (18) and/or the projector (20) are/is vertically adjustable and/or displaceable.

9. Vehicle (10) according to one of the preceding claims, wherein the projection surface (18) and/or the projector (20) are/is installed on the vehicle (10) by way of shock absorbers, rotary shock absorbers, hydraulic damping, frictional damping, an electromechanical damping system, pneumatic damping and/or other suspension systems such that vibrations and/or impacts are damped and/or absorbed.

10. Vehicle (10) according to one of the preceding claims, wherein the display device (16) comprises a control unit (36) that controls the projector (20) and/or the projection surface (18).

11. Vehicle (10) according to one of the preceding claims, wherein the vehicle (10) comprises an industrial truck (38), a wheeled loader, an excavator, an agricultural machine and/or a lorry.

12. Method for displaying a projection (24) on a projection surface (18) for a driver (14) of a vehicle (10), wherein the projection surface (18) extends in a horizontal and vertical direction, is curved in the horizontal direction, surrounds the driver (14) by at least 100 degrees in the horizontal direction and is integrated into a vehicle interior enclosed by a driver's cabin (12) and is fastened to the driver's cabin (12), comprising the following steps:
d) determining a viewing direction and/or head orientation (26) of the driver (14) onto the projection surface (18), and
f) projecting the projection (24) in the viewing direction and/or head orientation (26) of the driver (14) onto the projection surface (18).

13. Method according to the preceding claim, wherein the method additionally comprises the following steps:
b) determining a vertical position of the head of the driver (14) in the vehicle (10), and
c) vertically adjusting and/or displacing the projection surface (18) and/or the projector (20) on the basis of the vertical position of the head of the driver (14).

14. Method according to either of preceding Claims 12 and 13, wherein the method additionally comprises the following steps:
e) rotating the projector (20) in the viewing direction and/or head orientation (26) of the driver (14), and
g) vertically adjusting and/or displacing the projection surface (18) and/or the projector (20) into a starting position.

15. Method according to one of preceding Claims 12 - 14, wherein the method additionally comprises the following step:
a) determining that the driver (14) is present in the vehicle (10), and the method runs automatically after the vehicle (10) is started by the driver (14).

## Revendications

1. Véhicule (10) pourvu d'un dispositif d'affichage (16) pour un conducteur (14) du véhicule (10), dans lequel
le dispositif d'affichage (16) comprend une surface de projection (18) s'étendant dans les directions horizontale et verticale et un projecteur (20) qui est aménagé pour projeter une projection (24) sur la surface de projection (18), dans lequel
la surface de projection (18) est courbée dans la direction horizontale et entoure le conducteur (14) dans la direction horizontale sur au moins 100 degrés,
**caractérisé en ce que** la surface de projection (18) est intégrée dans un espace intérieur de véhicule enfermé par une cabine de conducteur (12) et est fixée à la cabine de conducteur (12).

2. Véhicule (10) selon l'une quelconque des revendications précédentes, le véhicule (10) présentant une cabine de conducteur (12), et la surface de projection (18) entourant le conducteur (14) dans la cabine de conducteur (12), et/ou la surface de projection (18) comprenant une surface de projection transparente (18).

3. Véhicule (10) selon l'une quelconque des revendications précédentes, dans lequel une étendue de la surface de projection (10) dans la direction horizontale correspond substantiellement à une étendue horizontale d'un champ de vision périphérique du conducteur (14).

4. Véhicule (10) selon la revendication précédente, comprenant un dispositif à capteurs (28) qui est aménagé pour déterminer une direction du regard et/ou une orientation de la tête (26) du conducteur (14), le projecteur (20) étant aménagé pour projeter la projection (24) dans la direction du regard et/ou l'orientation de la tête (26) du conducteur (14).

5. Véhicule (10) selon l'une quelconque des revendications précédentes, dans lequel la surface de projection (18) entoure le conducteur (14) dans la direction horizontale substantiellement en forme de fer à cheval, en forme de segment d'anneau, en forme de segment de cercle, en forme d'anneau ou en forme de cercle.

6. Véhicule (10) selon l'une quelconque des revendications précédentes, dans lequel le projecteur (20) est disposé par rapport à la surface de projection (18) de telle sorte qu'une distance (22) du projecteur (20) à la surface de projection (18) en raison de la courbure de la surface de projection (18) est substantiellement identique en tous les points de la surface de projection (18).

7. Véhicule (10) selon l'une quelconque des revendications précédentes, dans lequel la surface de projection (18) et/ou le projecteur (20) sont attachés à un toit (30) et/ou à un cadre du véhicule (10).

8. Véhicule (10) selon l'une quelconque des revendications précédentes, dans lequel la surface de projection (18) et/ou le projecteur (20) sont réglables et/ou coulissants verticalement.

9. Véhicule (10) selon l'une quelconque des revendications précédentes, dans lequel la surface de projection (18) et/ou le projecteur (20) sont attachés au véhicule (10) au moyen d'amortisseurs de chocs, d'amortisseurs de chocs rotatifs, d'un amortissement hydraulique, d'un amortissement à friction, d'un système d'amortissement électromécanique, d'un amortissement pneumatique et/ou d'autres systèmes de suspension de telle sorte que des vibrations et/ou des chocs sont amortis et/ou absorbés.

10. Véhicule (10) selon l'une quelconque des revendications précédentes, dans lequel le dispositif d'affichage (16) comprend une unité de commande (36) qui commande le projecteur (20) et/ou la surface de projection (18).

11. Véhicule (10) selon l'une quelconque des revendications précédentes, le véhicule (10) comprenant un chariot de manutention (38), une chargeuse sur roues, un excavateur, une machine agricole et/ou un poids lourd.

12. Procédé permettant de représenter une projection (24) sur une surface de projection (18) pour un conducteur (14) d'un véhicule (10), dans lequel la surface de projection (18) s'étend dans les directions horizontale et verticale, est courbée dans la direction horizontale, entoure le conducteur (14) dans la direction horizontale sur au moins 100 degrés et est intégrée dans un espace intérieur de véhicule enfermé par une cabine de conducteur (12) et est fixée à la cabine de conducteur (12), comprenant les étapes consistant à :
d) déterminer une direction du regard et/ou une orientation de la tête (26) du conducteur (14) sur la surface de projection (18), et
f) projeter la projection (24) dans la direction du regard et/ou de l'orientation de la tête (26) du conducteur (14) sur la surface de projection (18).

13. Procédé selon la revendication précédente, le procédé comprenant en outre les étapes suivantes consistant à :
b) déterminer une position verticale de la tête du conducteur (14) dans le véhicule (10), et
c) ajuster et/ou déplacer verticalement la surface de projection (18) et/ou le projecteur (20) en fonction de la position verticale de la tête du conducteur (14).

14. Procédé selon l'une quelconque des revendications précédentes 12 et 13, le procédé comprenant en outre les étapes suivantes consistant à :
e) tourner le projecteur (20) dans la direction du regard et/ou de l'orientation de la tête (26) du conducteur (14), et
g) ajuster et/ou déplacer verticalement la surface de projection (18) et/ou le projecteur (20) dans une position de départ.

15. Procédé selon l'une quelconque des revendications précédentes 12 à 14, le procédé comprenant en outre l'étape suivante consistant à :
a) déterminer une présence du conducteur (14) dans le véhicule (10), et
le procédé se déroulant de manière automatisée après le démarrage du véhicule (10) par le conducteur (14) .
